# EUROPÄISCHE PATENTSCHRIFT

(11) **EP 3 183 401 B1**
(45) Veröffentlichungstag und Bekanntmachung des Hinweises auf die Patenterteilung: **11.09.2019**
(21) Anmeldenummer: 15734647.9
(22) Anmeldetag: 02.07.2015
(51) Int. Cl.: E04H 12/12, E04C 2/28, E04C 2/38

(54) **BETONKONSTRUKTION IN MODULBAUWEISE**
CONCRETE CONSTRUCTION OF MODULAR DESIGN
STRUCTURE EN BÉTON MODULAIRE

(30) Priorität: 18.08.2014 DE 102014216364; 08.01.2015 DE 102015200105
(43) Veröffentlichungstag der Anmeldung: 28.06.2017
(73) Patentinhaber: Drössler GmbH Umwelttechnik, 57080 Siegen (DE)
(72) Erfinder: KEINDORF, Christian, 39646 Oebisfelde (DE); WAGNER, Dirk, 30173 Hannover (DE); LENZING, Peter, 57223 Kreuztal (DE); STAHL, Michael, 57462 Olpe (DE)
(74) Vertreter: Grosse, Wolf-Dietrich Rüdiger
(86) Internationale Anmeldenummer: PCT/EP2015/065091
(87) Internationale Veröffentlichungsnummer: WO 2016/026603

(56) Entgegenhaltungen:
- EP-A1- 0 945 554
- WO-A1-03/069099
- WO-A1-2013/022341
- DE-A1- 3 024 647
- DE-A1-102011 054 497
- DE-A1-102011 118 113
- DE-B1- 2 249 198
- DE-U1- 20 013 774

## Beschreibung

Die Erfindung betrifft eine Betonkonstruktion in Modulbauweise für Turmbauwerke, bestehend aus mindestens zwei aufstehenden, ggf. nebeneinander und ggf. übereinander angeordneten Fertigbeton-Wandelementen mit zwei Schmalseiten, die nach einem zusammenfügen der Fertigbeton-Wandelemente eine Vertikalfuge zwischen sich einschließen, einer Ober- und einer Unterseite, die nach einem zusammenfügen der Fertigbeton-Wandelemente eine Horizontalfuge zwischen sich einschließen sowie einer Vorder- und einer Rückseite.

Derartige Betonkonstruktionen können aus Fertigbeton-Wandelementen zusammengesetzte Hybridtürme von Windkraftanlagen, aber auch Wände von großen, hohen Behältern oder Gebäuden sein.

Die DE 10 2011 054 497 A 1 offenbart bereits ein Silo aus Betonfertigteilen, mit aus mehreren Ringsegmenten bestehenden Betonringen, die mittels im Betonmaterial der Ringsegmente eingebettete Verbindungsanker mit mindestens einer Schraubverbindung verbunden sind. Die einzelnen Ringsegmente werden also über auf Zug beanspruchte Schrauben, die durch die Ankerplatten der Fertigbetonelemente geführt sind, miteinander verbunden.

Weiterhin weisen nach der DE 821 403 C Betonbauelemente Verankerungen auf, die aus den Seitenwänden hervorstehen und deren Enden derart ausgebildet sind, dass sie mit den entsprechenden benachbarten Elementen in die Betonbauelemente verbindende Gussbetonnähte eingebettet sind. Diese Verankerungen können mit entsprechenden Verankerungen benachbarter Elemente vorzugsweise durch geeignet ausgebildete Überlagerungsflächen, wie Winkelknickungen, ringförmig ausgebildete freie Enden für ein Verschweißen, gegenseitiges Anhängen und dergleichen miteinander verbunden werden.

Die EP 0 945 554 A1 offenbart eine Schachtwandung (keinem Turm) aus vorgefertigten Wandelementen, bei denen eine Nut umlaufend um die Betonfertigteile angeordnet ist, und in der ein elastischer Dichtungswulst angeordnet ist. Bei dem elastischen Dichtungswulst handelt es sich jedoch nicht um ein bewehrtes Elastomerlager.

Die DE 30 24 647 A1 offenbart ein zylinderförmiges Silo, welches aus kreisförmig gekrümmten teilzylindrischen Wandelementen zusammengesetzt ist. Mehrere der kreisförmigen teilzylindrischen Wandelemente bilden einen ringförmigen Wandungsabschnitt. Zwischen zwei aufeinandergesetzten ringförmigen Wandungsabschnitten ist eine horizontale Fuge vorgesehen. In diese Lagerfuge ist zur elastischen Lagerung ein druckfester aber elastischer Lagerstreifen vorgesehen, der aus druckfestem elastischem Kunststoff bestehen kann.

Die Erfindung geht von der Aufgabe aus, eine Betonkonstruktion in Modulbauweise der eingangs genannten Art derart auszubilden, dass sich eine einfache und sichere Verbindung der Fertigbeton-Wandelemente ohne dass Verfüllfugen, bei denen aufwändig und kostenintensiv entsprechender Mörtel, Beton oder Kunstharz vor Ort eingefüllt werden muss, notwendig werden.

Die Aufgabe wird erfindungsgemäß für eine Betonkonstruktion der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass in einer der Schmalseiten ein erster Wabenträger verankert ist und dass die gegenüberliegende Schmalseite eine Ausnehmung oder Vertiefung aufweist, in der ein weiterer Wabenträger derart verankert ist, dass bei Montage der Schmalseiten der beiden Fertigbeton-Wandelemente unter Bildung der Vertikalfuge die beiden Wabenträger teilweise überlappen, und durch Verbindungsmittel verbindbar sind.

Dadurch wird erreicht, dass mit einfachen Mitteln eine kraftschlüssige Verbindung zwischen den Wandelementen hergestellt werden kann, ohne dass es eines Injektionsmörtels bedarf. Selbstverständlich können die, die Wabenträger aufnehmenden Ausnehmungen oder Vertiefungen auch in beiden Schmalseiten eines Fertigbeton-Wandelementes vorgesehen werden. In diesem Falle müssen die Ausnehmungen oder Vertiefungen nicht so tief sein, als wenn nur eine Ausnehmung oder Vertiefung die Wabenträger aufnehmen müsste.

Diese Vertikalfugen können aber auch z.B. im Behälterbau Anwendung finden, wo entsprechend aufstehende Fertigbeton-Wandelemente nur nebeneinander und nicht auch noch übereinander angeordnet werden.

Es hat sich bewährt, dass in einer Ausnehmung oder Vertiefung der Unterseite der Fertigbeton-Wandelemente ein Bauwerkslager, insbesondere ein bewehrtes Elastomerlager angeordnet ist, welches bei Montage eines Fertigbeton-Wandelemente auf der Oberseite des darunter befindlichen Fertigbeton-Wandelementes, die Horizontalfuge bildend, abgestützt ist.

Über das Bauwerkslager können die insbesondere auftretenden Auflasten optimal übertragen werden. Über die Bauwerkslager werden kraftschlüssige Verbindungen erreicht, die den Einsatz von Injektionsmörtel überflüssig machen.

Selbstverständlich können beim Bau von Hybridtürmen die auf den obersten Ring der Fertigbeton-Wandelemente aufgesetzten Übergangsringe und/oder Adapterringe auf ihrer Unterseite ebenfalls mit Ausnehmungen oder Vertiefungen ausgestattet sein, die Bauwerkslager aufnehmen, welche eine kraftschlüssige Verbindung zwischen dem Metallteil und dem Betonteil des Hybridturms herstellen, ohne das es des Einsatzes von Verbindungsmörtel bedarf.

Von Vorteil ist, wenn bei den Horizontalfugen der zwischen Vorderseite und Oberseite gebildete Kantenbereich nach unten geneigt ist.

Dadurch wird erreicht, dass von außen in die Horizontalfuge gelangendes Wasser aus der Fuge abfließen kann, so dass eine optimale Entwässerung gewährleistet ist.

Zweckmäßig ist, wenn die Wabenträger aus einem Profil bestehen, das einen Gurt aufweist, an den zur Verankerung mit den Fertigbeton-Wandelementen in den Beton ragenden Verankerungselemente z.B. Kopfbolzen, und an den zur Verbindung zweier Wandelemente miteinander ein Steg angebracht sind, wobei der Steg des Profils eine Wabenform aufweist.

Zweckmäßig ist es aber auch, wenn die Wabenträger aus einem Band bestehen, welches einen abgewinkelten Steg aufweist, der das Profil einer Wabenform besitzt und der aus jeweils einer der Schmalseiten hervorsteht, wobei der Winkel so gewählt ist, dass sich das Band in einer Ebene im Wesentlichen parallel zur Vorder- oder Rückseite eines ersten Fertigbeton-Wandelements erstreckt, während sich der Steg in einer Ebene parallel zur Vorder- oder Rückseite eines zweiten Fertigbeton-Wandelements welches mit dem ersten Fertigbeton-Wandelement eine gemeinsame Vertikalfuge bildet, erstreckt, und dass das Band im Wesentlichen rechtwinklig von diesem abstehende Bewehrungsstäbe aufweist, die zudem der Halterung weiterer, im Wesentlichen parallel zur Ebene der Vorder- oder Rückseite sich erstreckenden Verankerungselementen dienen.

In vorteilhafter Weise können in dem Steg des Profils Befestigungsösen, z.B. Durchgangsbohrungen vorgesehen, und die Verbindungsmittel durch diese Befestigungsösen greifende Schraubverbindungen, Bolzenverbindungen, Gewindestangenverbindungen usw. sein.

Bei der Montage der Fertigbeton-Wandelemente werden die Befestigungsösen zweier benachbarter Fertigbeton-Wandelemente fluchtend ausgerichtet und die benachbarten Wabenträger werden z.B. über Schrauben verbunden, so dass die Schrauben anschließend im Wesentlichen auf Scherung beansprucht werden. Es kann aber auch einer der Wabenträger einen fest mit diesem verbundenen, z.B. verschweißten Gewindebolzen aufweisen, der dann bei der Montage der Fertigbeton-Wandelemente durch die Befestigungsösen des Wabenträgers eines weiteren Fertigbeton-Wandelementes gesteckt und anschließend mit einer Mutter gesichert wird.

Es hat sich als vorteilhaft erwiesen, wenn das Fertigbeton-Wandelement an mindestens einer seiner mit einem weiteren Fertigbeton-Wandelement zusammengefügten Seiten einen ersten Höhenbereich mit den beiden Wabenträgern in einer ersten Ausrichtung aufweist, dass ein zweiter Höhenbereich der Seite vorgesehen ist, in dem die beiden Wabenträger in einer zweiten Ausrichtung angeordnet sind, wobei die Fertigbeton-Wandelemente in der Höhe der jeweiligen Höhenbereiche versetzt zueinander zusammengefügt sein können.

In vorteilhafter Weise kann der Steg des Profils des Wabenträgers in einem Winkel zum Gurt von ≤ 90° angeordnet sein, so dass die Verankerungselemente z.B. Kopfbolzen mit Ihrem Schaft parallel zu Wandebene der Wandelemente verlaufen. Die Verankerung der z.B. Kopfbolzen im Beton der Wandelemente lässt sich erfindungsgemäß verstärken, wenn die Verankerungselemente mit einer Rückhängebewehrung in Zug- und Querrichtung in Form einer Oberflächenbewehrung bestehend aus geraden Stäben mit oder ohne Haken versehen sind.

Die Erfindung ist nachfolgend anhand von in der Zeichnung dargestellten Ausführungsbeispielen näher erläutert. Es zeigen:
- Figur 1: Eine Draufsicht auf einen erfindungsgemäßen Wabenträger,
- Figur 2: eine Seitenansicht eines erfindungsgemäßen Wabenträgers gemäß Figur 1,
- Figur 3: eine Draufsicht auf eine Seite eines Fertigbeton-Wandelements mit dem erfindungsgemäßen Wabenträger gemäß Figur 1,
- Figur 4: eine Draufsicht auf die andere Seite eines Fertigbeton-Wandelements mit einem erfindungsgemäß versenkten Wabenträger gemäß Figur 1 zur Verbindung mit dem Fertigbeton-Wandelement gemäß Figur 3,
- Figur 5: eine Draufsicht auf eine Verbindungsstelle zweier Wandelemente mittels der Wabenträger,
- Figur 6: eine Draufsicht auf einen weiteren erfindungsgemäßen Wabenträger,
- Figur 7: einen Ausschnitt einer Seitenansicht eines Wabenträgers gemäß Figur 6,
- Figur 8: eine Draufsicht auf eine Verbindungsstelle zweier Wandelemente mittels vereinfacht dargestelltem Wabenträger nach Figur 5 oder 6,
- Figur 9: zwei miteinander verbundene Wandelemente gemäß Figur 5 oder 8, und
- Figur 10: zwei Fertigbeton-Wandelemente, die zwischen sich eine Horizontalfuge einschließen.

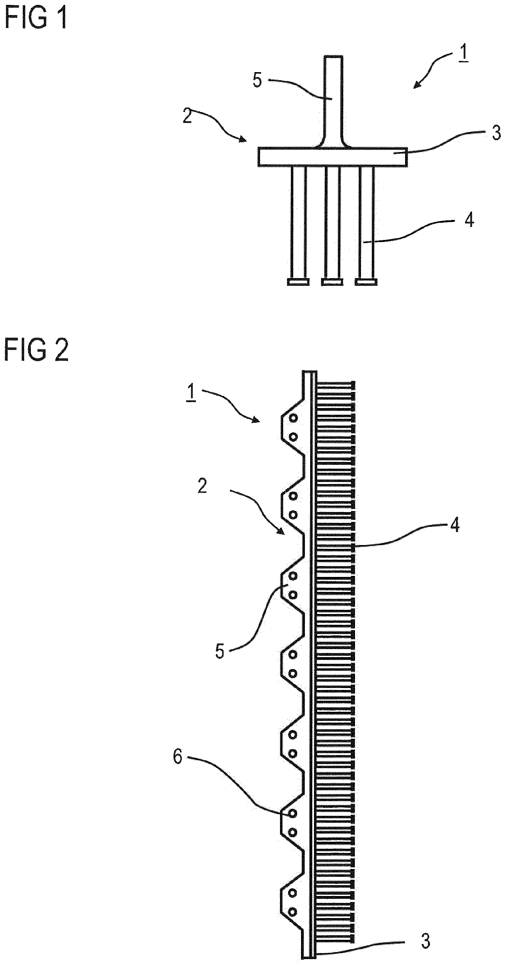

In der Figur 1 ist ein Wabenträger 1 zur Befestigung zweier Wandelemente aneinander mit einem Profil 2 in Sicht auf seine Schmalseite dargestellt. An einem Gurt 3, vorzugsweise einer Stahlplatte, ist eine Vielzahl von Verankerungselementen 4 angebracht, die, wie nachfolgend noch gezeigt wird, in die Wandelemente eingebaut sind.

An dem Gurt 3 sind, wie insbesondere aus Figur 2 ersichtlich wird, die eine Seitenansicht des Wabenträgers 1 zeigt, Waben 5 angeordnet, die den Steg des Profils 2 bilden. In den Waben 5 sind Befestigungsösen 6 vorgesehen, mittels derer sich zwei Wabenträger 1 verbinden lassen.

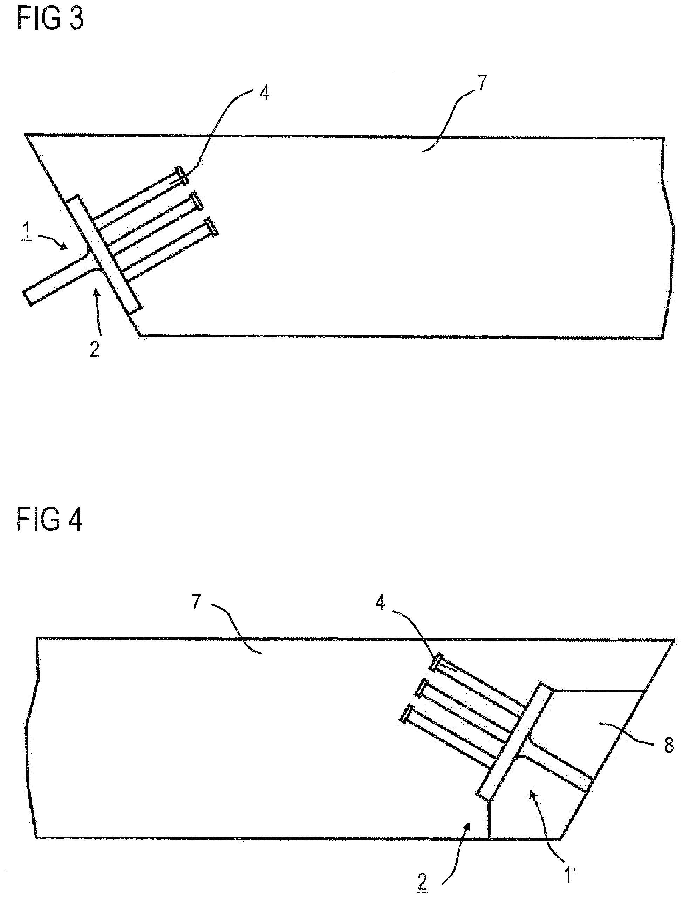

Die Figuren 3 und 4 zeigen im Querschnitt ein aufstehendes Fertigbeton-Wandelement 7, das zwei in einem Winkel ungleich 90°, im dargestellten beispielsweisen Fall einem Winkel von 60°, angeordneten Schmalseiten, eine Ober- und eine Unterseite sowie eine Vorder- und eine Rückseite aufweist. Auf der in Figur 3 dargestellten einen schrägen Schmalseite ist der Gurt 3 des Wabenträgers 1 bündig versenkt, so dass die Verankerungselemente 4 alle im Fertigbeton des Wandelements 7 eingebunden sind.

In der Figur 4 ist die andere schräge Schmalseite des Fertigbeton-Wandelements 7 dargestellt, die eine Vertiefung bzw. Aussparung 8 aufweist, in deren schrägen Boden ebenfalls der Gurt 3 eines zweiten Wabenträgers 1' bündig versenkt ist. Der Boden der Vertiefung 8 ist parallel zur Schmalseite des Wandelements 7 ausgerichtet.

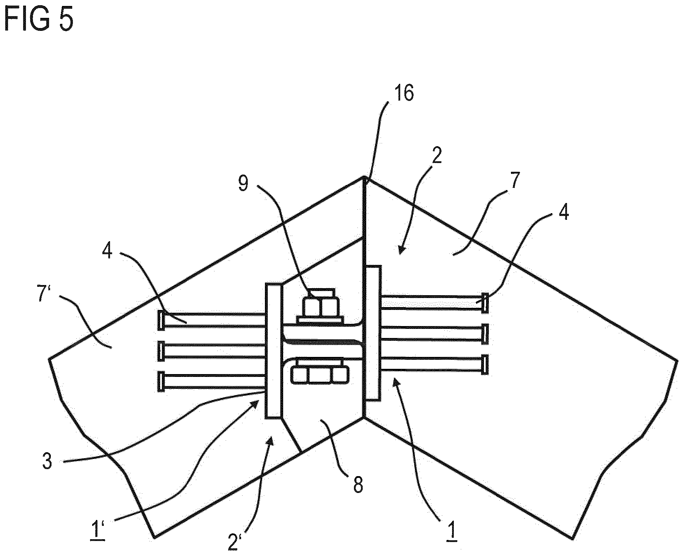

Durch diese Anordnung der beiden Wabenträger 1 und 1' an dem Wandelement 7 ist es möglich, zwei Wandelemente 7 und 7' mit ihren Schmalseiten auf Stoß miteinander zu verbinden, wie dies anhand der Figur 5 gezeigt ist. Die Stege des Profils 2 der beiden Wabenträger 1 und 1', die an den Schmalseiten der beiden aneinander stoßenden Wandelemente 7 und 7' in beschriebener Weise angebracht sind, liegen im zusammengebauten Zustand derart übereinander, dass sie mittels durch die Befestigungsösen 6 greifenden Verbindungsmittel 9, z.B. Schraubverbindung oder Bolzenverbindung verbindbar sind.

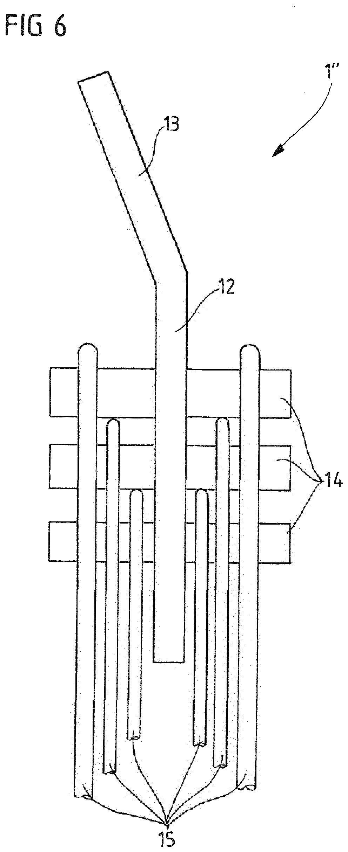

Figur 6 zeigt einen Wabenträger 1", der aus einem Band 12 besteht, welches einen abgewinkelten Steg 13 aufweist. Der Winkel ist entsprechend der Anzahl der für das Polygon gewählten Seitenwände ausgelegt. Obwohl sicherlich auch dreieckige Türme denkbar sind, werden regelmäßig fünfeckige Türme bzw. Türme mit mehr als fünf Ecken gewählt, so dass der Winkel entsprechend der Anzahl der Seitenflächen, in der Regel zwischen 90° und 180° liegt.

Das Band 12 wird von Verankerungselementen 14 durchdrungen, die dem sicheren Halt des Bandes 12 in den Fertigbeton-Wandelementen 7. 7', ..., 7ⁿ' dient.

Die Zugfestigkeit zwischen Band 12 und Fertigbeton-Wandelementen 7. 7', ..., 7ⁿ' wird noch erhöht, wenn Bewehrungsstäbe 15, die sich an den Verankerungselementen 14 abstützen bzw. rückverankern, vorgesehen werden.

Alternativ können die beiden, in den Schmalseiten der Fertigbeton-Wandelemente 7. 7', ..., 7ⁿ vorgesehenen Wabenträger 1 aber auch mit einer horizontalen Querverbindung von Seitenwald zu Seitenwand innerhalb des Wandelements 7. 7', ..., 7ⁿ' verbunden sein, um die entsprechenden Kräfte aufnehmen zu können.

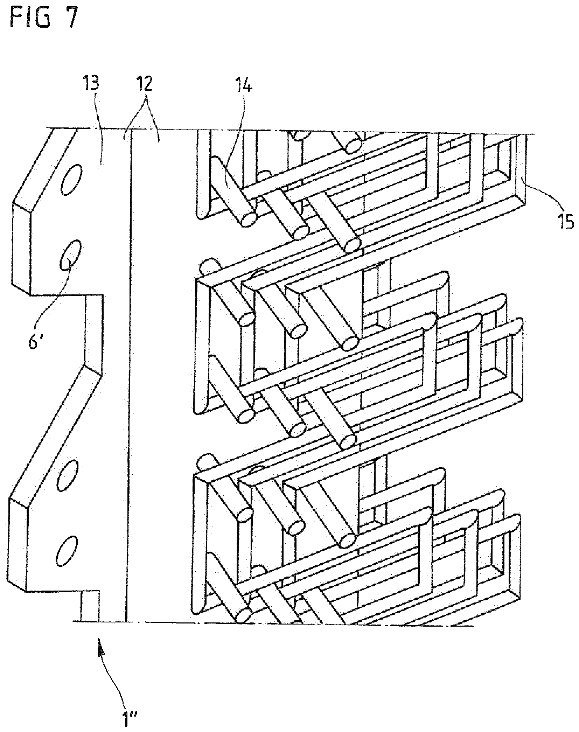

Figur 7 zeigt den Ausschnitt aus einem entsprechenden Wabenträger 1". Im abgewinkelten Steg 13, der eine Wabenform aufweist, sind Befestigungsösen 6' erkennbar. Der in dem nicht gezeigten Beton eingegossene Teil des Bandes 12 weist die Verankerungselementen 14 und Bewehrungselemente 15 auf.

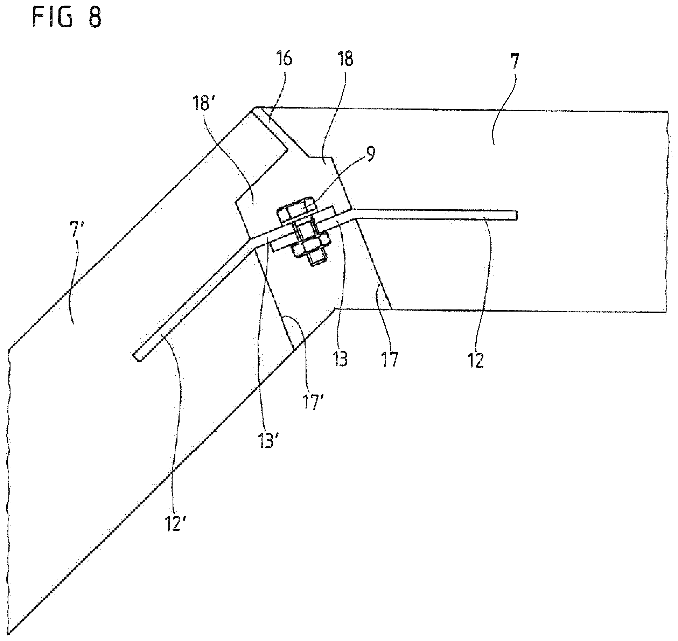

Figur 8 zeigt eine Verbindung zweiter Fertigbeton-Wandelemente 7, 7', die zwischen sich eine Vertikalfuge 16 einschließen. Die Schmalseiten 17 und 17' der Fertigbeton-Wandelemente 7, 7' weisen Ausnehmungen 18, 18' auf, die zur Aufnahme der Steg 13, 13' dienen. Die Bänder 12, 12' sind hier vereinfacht ohne Bewehrungselemente und Verankerungselemente dargestellt. Die Stege 13, 13' sind über ein Verbindungsmittel 9, welches hier auf Scherung beansprucht wird, verbunden.

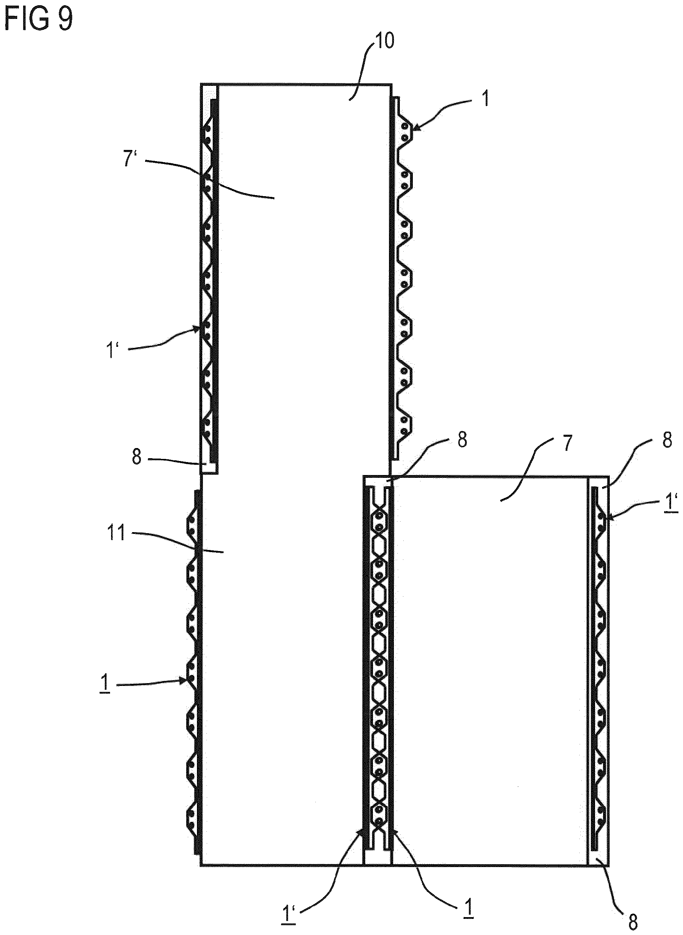

Die Figur 9 zeigt nun die Gegebenheiten zweier gemäß Figur 5 bzw. 8 miteinander verbundener Wandelemente 7 und 7' in Frontansicht. Damit die Wandelemente 7 und 7', die im zusammengebauten Zustand einen Ring oder geschlossenes Polygon beispielsweise eines Turmes einer Windenergieanlage bilden, schon beim Aufstellen der Wandelemente 7 und 7' während der Montage einen Halt aufweisen, sind sie in wenigstens zwei Höhenbereiche 10 und 11 unterteilt. Dabei sind die beiden Wabenträger 1 und 1' in den Höhenbereichen 10 und 11 an unterschiedlichen Schmalseiten angeordnet. So ist der Wabenträger 1 im oberen Höhenbereiche 10 an der rechten Schmalseite und der Wabenträger 1' an der linken angeordnet. Im unteren Höhenbereich 11 dagegen ist es umgekehrt, da ist der Wabenträger 1 an der linken Schmalseite und der Wabenträger 1' an der rechten angebracht. In vorteilhafter Weise sind als Bodenelemente alternierend ein ganzes Wandelement 7' mit zwei Höhenbereichen 10 und 11 und ein Wandelement 7 mit nur einem Höhenbereich vorgesehen, so dass sich eine versetzte Anordnung der Stoßfugen ergibt.

Die Wabenträger 1 und 1' bzw. 1" eines Fertigbeton-Wandelements 7 passen dabei komplementär mit den Wabenträgern 1 und 1' des zweiten Fertigbeton-Wandelements 7' zusammen. Sind bereits mehrere Fertigbeton-Wandelemente 7 und 7' zusammengefügt, so lässt sich ein weiteres Wandelement an die Wandelementen anfügen. Dabei wird das neu eingesetzte Fertigbeton-Wandelement auf die waagerechte Oberseite eines unteren Fertigbeton-Wandelements aufgesetzt und an die bereits stehenden Fertigbeton-Wandelemente angelehnt.

Die Wabenträger 1 und 1' können gewalzt und nach dem Schweißen der Verankerungselemente 4 verzinkt sein, wobei die Verankerungselemente 4 wegen des Einbaus im Beton nicht verzinkt werden müssen, aber verzinkt sein können. Die Stege des Profils 2 können anstelle durch einen Walzvorgang aber auch an den Gurt 3 geschweißt sein.

Die einbetonierten und ggf. rückverankerten Wabenträger 1 und 1' dienen gleichzeitig als Schalkante. Je Seite einer Wand wird eine Hälfte des Wabenträgers eingesetzt. Sofern die Wabenträger aus Walzprofilen bestehen, müssen keine Schweißverbindungen hergestellt werden, wodurch Imperfektionen infolge Schweißverzugs vermieden werden. Die Stegbleche der Wabenträger besitzen jeweils zwei Schraubenlöcher in einem definierten Rand- und Lochabstand. Die Verankerung der Wabenträger kann durch Kopfbolzen erfolgen, die wiederum mit eine Rückhängebewehrung in Zug- und Querrichtung versehen sein können, da der Längsschub entlang einer vertikalen Fuge des Betonschaftes auf den Kopfbolzen bezogen eine Querkraft bzw. Abscherkraft bewirkt.

Die Rückhängebewehrung kann in Form einer Oberflächenbewehrung bestehend aus geraden Stäben mit oder ohne Haken ausgebildet sein. In Bezug auf die Wandelemente 7 und 7' für einen Betonschaft kann eine prinzipiell in Längsrichtung erfolgende Rückhängebewehrung vorgesehen sein, um den Längsschub entlang einer vertikalen Fuge zu verankern.

Um eine vertikale Verfüllfuge bei Betonkonstruktion in Modulbauweise zu vermeiden, bei der entsprechender Mörtel, Beton oder Kunstharz vor Ort eingefüllt werden muss, dient die erfindungsgemäße Verschraubung als kraftschlüssige Verbindung zwischen den Wandelementen 7 und 7'.

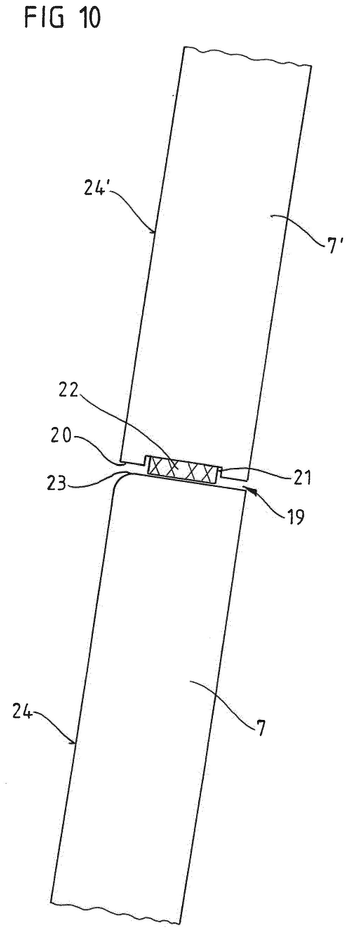

Figur 10 zeigt abgebrochen dargestellt ein unteres Fertigbeton-Wandelement 7 und ein oberes Fertigbeton-Wandelement 7', die zwischen sich eine Horizontalfuge 19 ausbilden. Die Schrägstellung der Fertigbeton-Wandelemente 7, 7' deutet dabei die sich nach oben verjüngende Kontur eines Turmbauwerkes an. Die Unterseite 20 des oberen Fertigbeton-Wandelementes 7' weist eine Ausnehmung 21 auf, in der ein Bauwerkslager 22 angeordnet ist, welches sich auf der Oberseite 23 des unteren Fertigbeton-Wandelementes 7 abstützt.

Damit das Bauwerkslager 22 entwässert werden kann ist die Kante zwischen der Vorderseite 24 des Fertigbeton-Wandelementes 7 und dessen Oberseite 23 abgerundet.

### Bezugszeichenliste

- 1: Wabenträger
- 2: Profil
- 3: Gurt
- 4: Verankerungselemente
- 5: Waben
- 6: Befestigungsösen
- 7: Fertigbeton-Wandelement
- 8: Vertiefungen Aussparungen
- 9: Verbindungsmittel
- 10: oberer Höhenbereich
- 11: unterer Höhenbereich
- 12: Band
- 13: Steg
- 14: Verankerungselement
- 15: Bewehrungselement
- 16: Vertikalfuge
- 17: Schmalseiten
- 18: Ausnehmungen
- 19: Horizontalfuge
- 20: Unterseite
- 21: Ausnehmung
- 22: Bauwerkslager
- 23: Oberseite
- 24: Vorderseite

## Patentansprüche

1. Betonkonstruktion in Modulbauweise vorzugsweise für Turmbauwerke insbesondere Hybridtürme von Windenergieanlagen, bestehend aus mindestens zwei aufstehenden, nebeneinander und ggf. übereinander angeordneten Fertigbeton-Wandelementen (7, 7', ..., 7ⁿ') mit zwei Schmalseiten (17, 17'), die nach einem Zusammenfügen der Fertigbeton-Wandelemente (7, 7', ..., 7ⁿ') eine Vertikalfuge (16) zwischen sich einschließen, einer Ober- (23) und einer Unterseite (20), die nach einem Zusammenfügen der Fertigbeton-Wandelemente (7, 7', ..., 7ⁿ') eine Horizontalfuge (19) zwischen sich einschließen sowie einer Vorder- (24) und einer Rückseite,
**dadurch gekennzeichnet,**
**dass** in einer der Schmalseiten ein erster Wabenträger (1) verankert ist und dass die gegenüberliegende Schmalseite eine Ausnehmung oder Vertiefung (8) aufweist, in der ein weiterer Wabenträger (1') derart verankert ist, dass bei Montage der Schmalseiten der beiden Fertigbeton-Wandelemente (7, 7') unter Bildung der Vertikalfuge (16) die beiden Wabenträger (1, 1') durch Verbindungsmittel (9) verbindbar sind.

2. Betonkonstruktion nach Anspruch 1,
**dadurch gekennzeichnet,**
**dass** in einer Ausnehmung (21) oder Vertiefung der Unterseite (20) der Fertigbeton-Wandelemente (7, 7', ..., 7ⁿ') ein Bauwerkslager (22), insbesondere ein bewehrtes Elastomerlager angeordnet ist, welches bei Montage der Betonkonstruktion auf der Oberseite (23) des darunter befindlichen Fertigbeton-Wandelementes (7, 7', ..., 7ⁿ'), die Horizontalfuge (19) bildend, abgestützt ist.

3. Betonkonstruktion nach Anspruch 2 ,
**dadurch gekennzeichnet,**
**dass** der zwischen Vorderseite (24) und Oberseite (23) gebildete Kantenbereich nach unten geneigt ist.

4. Betonkonstruktion nach einem der Ansprüche 1 bis 3,
**dadurch gekennzeichnet,**
**dass** die Wabenträger (1, 1') aus einem Profil (2) bestehen, das einen Gurt (3) aufweist, an den zur Verankerung mit den Fertigbeton-Wandelementen (7, 7', ..., 7ⁿ') in den Beton ragende Verankerungselemente (4), und an den zur Verbindung zweier Wandelemente (7, 7') miteinander ein Steg angebracht sind, wobei der Steg des Profils (2) eine Wabenform aufweist.

5. Betonkonstruktion nach einem der Ansprüche 1 bis 3,
**dadurch gekennzeichnet,**
**dass** die Wabenträger (1") aus einem Band (12) bestehen, welches einen abgewinkelten Steg (13) aufweist, der das Profil einer Wabenform besitzt und der aus jeweils einer der Schmalseiten (17, 17') hervorsteht, wobei der Winkel so gewählt ist, dass sich das Band (12) in einer Ebene im Wesentlichen parallel zur Vorder- (24) oder Rückseite eines ersten Fertigbeton-Wandelements (7) erstreckt, während sich der Steg (13) in einer Ebene im Wesentlichen parallel zur Vorder- oder Rückseite eines zweiten Fertigbeton-Wandelements (7') welches mit dem ersten Fertigbeton-Wandelement eine gemeinsame Vertikalfuge (16) bildet, erstreckt, und dass das Band (12) im Wesentlichen rechtwinklig von diesem abstehende Verankerungselemente (14) aufweist, die zudem der Rückverankerung weiterer, im Wesentlichen parallel zur Ebene der Vorder- (24) oder Rückseite sich erstreckenden Bewehrungsstäbe (15) dienen können.

6. Betonkonstruktion nach einem der Ansprüche 1 bis 5,
**dadurch gekennzeichnet,**
**dass** in dem Steg des Profils (2) bzw. in dem abgewinkelten Steg (13) Befestigungsösen (6) vorgesehen sind, und dass die Verbindungsmittel (9) durch diese Befestigungsösen (6) greifen.

7. Betonkonstruktion nach einem der Ansprüche 1 bis 6,
**dadurch gekennzeichnet,**
**dass** das Fertigbeton-Wandelement (7) an mindestens einer seiner mit einem weiteren Fertigbeton-Wandelement (7') zusammengefügten Seiten einen ersten Höhenbereich (10) mit den beiden Wabenträgern (1, 1') in einer ersten Ausrichtung aufweist, dass ein zweiter Höhenbereich (11) der Seite vorgesehen ist, in dem die beiden Wabenträger (1, 1') in einer zweiten Ausrichtung angeordnet sind.

8. Betonkonstruktion nach Anspruch 7,
**dadurch gekennzeichnet,**
**dass** die Fertigbeton-Wandelemente (7, 7') in der Höhe der jeweiligen Höhenbereiche (10, 11) versetzt zueinander zusammengefügt sind.

9. Betonkonstruktion nach Anspruch 4,
**dadurch gekennzeichnet,**
**dass** der Steg des Profils (2) des Wabenträgers (1, 1') in einem Winkel zum Gurt (3) von ≤ 90° angeordnet ist, und dass die Verankerungselemente (4) mit Ihrem Schaft im Wesentlichen parallel zu Wandebene der Wandelemente (1, 1') verlaufen.

10. Betonkonstruktion nach einem der Ansprüche 4 oder 5,
**dadurch gekennzeichnet,**
**dass** die Verankerungselemente (4) mit einer Rückhängebewehrung in Zug- und Querrichtung in Form einer Oberflächenbewehrung bestehend aus geraden Stäben mit oder ohne Haken versehen sind.

## Claims

1. A concrete structure in modular design, preferably for tower structures, particularly hybrid towers of wind turbines, consisting of at least two standing precast concrete wall elements (7, 7', ..., 7ⁿ'), arranged next to one another and if appropriate above one another, having two narrow sides (17, 17'), which enclose a vertical joint (16) between them after joining the precast concrete wall elements (7, 7', ..., 7ⁿ'), an upper side (23) and an underside (20), which enclose a horizontal joint (19) between them after joining the precast concrete wall elements (7, 7', ..., 7ⁿ'), and also a front side (24) and a rear side,
**characterized in that**
a first honeycomb support (1) is anchored in one of the narrow sides and **in that** the opposite narrow side has a recess or depression (8), in which a further honeycomb support (1') is anchored in such a manner that, during assembly of the two precast concrete wall elements (7, 7') with the formation of the vertical joint (16), the two honeycomb supports (1, 1') can be connected by connecting means (9).

2. The concrete structure according to Claim 1,
**characterized in that**
a structural bearing (22), particularly a reinforced elastomer bearing, is arranged in a recess (21) or depression of the underside (20) of the precast concrete wall elements (7, 7', ..., 7ⁿ'), which structural bearing is supported on the upper side (23) of the precast concrete wall element (7, 7', ..., 7ⁿ') located therebelow, forming the horizontal joint (19), during the assembly of the concrete structure.

3. The concrete structure according to Claim 2,
**characterized in that**
the edge region formed between front side (24) and upper side (23) is inclined downwards.

4. The concrete structure according to one of Claims 1 to 3,
**characterized in that**
the honeycomb supports (1, 1') consist of a profile (2), which has a flange (3), to which anchoring elements (4) protruding into the concrete are attached for anchoring to the precast concrete wall elements (7, 7', ..., 7ⁿ'), and to which a web is attached for connecting two wall elements (7, 7') to one another, wherein the web of the profile (2) has a honeycomb shape.

5. The concrete structure according to one of Claims 1 to 3,
**characterized in that**
the honeycomb supports (1") consist of a strip (12), which has an angled web (13), which has the profile of a honeycomb shape and which protrudes from one of the narrow sides (17, 17') in each case, wherein the angle is chosen such that the strip (12) extends in a plane substantially parallel to the front side (24) or rear side of a first precast concrete wall element (7), whilst the web (13) extends in a plane substantially parallel to the front side or rear side of a second precast concrete wall element (7'), which forms a common vertical joint (16) with the first precast concrete wall element, and **in that** the strip (12) has anchoring elements (14) protruding substantially at right angles from the same, which anchoring elements can additionally be used for back anchoring further reinforcing rods (15) extending substantially parallel to the plane of the front side (24) or rear side.

6. The concrete structure according to one of Claims 1 to 5,
**characterized in that**
fixing eyelets (6) are provided in the web of the profile (2) or in the angled web (13), and **in that** the connecting means (9) engage through these fixing eyelets (6).

7. The concrete structure according to one of Claims 1 to 6,
**characterized in that**
the precast concrete wall element (7) has a first height region (10) with the two honeycomb supports (1, 1') in a first orientation on at least one of its sides joined to a further precast concrete wall element (7') and **in that** a second height region (11) of the side is provided, in which the two honeycomb supports (1, 1') are arranged in a second orientation.

8. The concrete structure according to Claim 7,
**characterized in that**
the precast concrete wall elements (7, 7') are joined offset with respect to one another at the height of the respective height regions (10, 11).

9. The concrete structure according to Claim 4,
**characterized in that**
the web of the profile (2) of the honeycomb support (1, 1') is arranged at an angle to the flange (3) of ≤ 90°, and **in that** the shafts of the anchoring elements (4) run substantially parallel to the wall plane of the wall elements (1, 1').

10. The concrete structure according to one of Claims 4 or 5,
**characterized in that**
the anchoring elements (4) are provided with a rear-suspended reinforcement in the tensile and transverse direction in the form of a surface reinforcement consisting of straight rods with or without hooks.

## Revendications

1. Construction en béton de conception modulaire, de préférence pour des ouvrages de tour, en particulier des tours hybrides d'installations d'énergie éolienne, composée d'au moins deux éléments muraux en béton préparé dressés, disposés l'un à côté de l'autre et le cas échéant l'un sur l'autre (7, 7', ..., 7ⁿ') avec deux côtés étroits (17, 17'), qui incluent après un assemblage des éléments muraux en béton préparé (7, 7', ..., 7ⁿ') un joint vertical (16) entre eux, une face supérieure (23) et une face inférieure (20), qui incluent après un assemblage des éléments muraux en béton préparé (7, 7', ..., 7ⁿ') un joint horizontal (19) entre elles ainsi qu'une face avant (24) et une face arrière,
**caractérisée en ce que**
dans un des côtés étroits est ancré un premier support alvéolaire (1) et **en ce que** le côté étroit opposé comporte un, évidement ou une cavité (8) dans lequel est ancré un autre support alvéolaire (1') de telle manière que lors du montage des côtés étroits des deux éléments muraux en béton préparé (7, 7'), les deux supports alvéolaires (1, 1') peuvent être reliés par des moyens de liaison (9) par la formation du joint vertical (16).

2. Construction en béton selon la revendication 1,
**caractérisée en ce que**
dans un évidement (21) ou une cavité de la face inférieure (20) des éléments muraux en béton préparé (7, 7', ..., 7ⁿ') est disposé un support d'ouvrage (22), en particulier un support en élastomère armé, lequel est appuyé lors du montage de la construction en béton sur la face supérieure (23) de l'élément mural en béton préparé (7, 7', ..., 7ⁿ') se trouvant en dessous, formant ainsi le joint horizontal (19).

3. Construction en béton selon la revendication 2,
**caractérisée en ce que**
la zone de bord formée entre la face avant (24) et la face supérieure (23) est inclinée vers le bas.

4. Construction en béton selon l'une quelconque des revendications 1 à 3,
**caractérisée en ce que**
les supports alvéolaires (1, 1') sont composés d'un profilé (2), qui comporte une ceinture (3), sur laquelle sont disposés des éléments d'ancrage (4) dépassant dans le béton pour ancrage avec les éléments muraux en béton préparé (7, 7', ..., 7ⁿ') et une membrure pour assemblage de deux éléments muraux (7, 7') ensemble, sachant que la membrure du profilé (2) comporte une forme alvéolaire.

5. Construction en béton selon l'une quelconque des revendications 1 à 3,
**caractérisée en ce que**
les supports alvéolaires (1") sont composés d'une bande (12), laquelle comporte une membrure coudée (13), qui possède le profilé d'une forme alvéolaire et qui fait saillie respectivement d'un des côtés étroits (17, 17'), sachant que l'angle est choisi de telle sorte que la bande (12) s'étend dans un plan pour l'essentiel parallèlement à la face avant (24) ou arrière d'un premier élément mural en béton préparé (7), tandis que la membrure (13) s'étend dans un plan pour l'essentiel parallèlement à la face avant ou arrière d'un deuxième élément mural en béton préparé (7') lequel forme avec le premier élément mural en béton préparé un joint vertical (16) commun et **en ce que** la bande (12) comporte des éléments d'ancrage (14) s'écartant de celle-ci pour l'essentiel à angle droit, qui peuvent servir en outre au réancrage d'autres barres d'armature (15) s'étendant pour l'essentiel parallèlement au plan de la face avant (24) ou arrière.

6. Construction en béton selon l'une quelconque des revendications 1 à 5,
**caractérisée en ce que**
des oeillets de fixation (6) sont prévus dans la membrure du profilé (2) ou dans la membrure coudée (13) et **en ce que** les moyens d'assemblage (9) viennent en prise à travers ces oeillets de fixation (6).

7. Construction en béton selon l'une quelconque des revendications 1 à 6,
**caractérisée en ce que**
l'élément mural en béton préparé (7) comporte sur au moins une de ses faces assemblées à un autre élément mural en béton préparé (7') une première zone de hauteur (10) avec les deux supports alvéolaires (1, 1') dans une première direction, **en ce qu'**une deuxième zone de hauteur (11) de la face est prévue les deux supports alvéolaires (1, 1') étant disposés dans une deuxième direction.

8. Construction en béton selon la revendication 7,
**caractérisée en ce que**
les éléments muraux en béton préparé (7, 7') sont assemblés décalés les uns par rapport aux autres à la hauteur des zones de hauteur respectives (10, 11).

9. Construction en béton selon la revendication 4,
**caractérisée en ce que**
la membrure du profilé (2) du support alvéolaire (1, 1') est disposée dans un angle de ≤ 90° par rapport à la ceinture (3) et **en ce que** les éléments d'ancrage (4) passent avec leur tige pour l'essentiel parallèlement au plan mural des éléments muraux (1, 1').

10. Construction en béton selon l'une quelconque des revendications 4 ou 5,
**caractérisée en ce que**
les éléments d'ancrage (4) sont dotés d'une armature pendante arrière dans la direction de traction et transversale sous la forme d'une armature de surface composée de barres droites avec ou sans crochets.
